# EUROPEAN PATENT SPECIFICATION

(11) **EP 3 694 729 B1**
(45) Date of publication and mention of the grant of the patent: **27.03.2024**
(21) Application number: 18865603.7
(22) Date of filing: 08.10.2018
(51) Int. Cl.: B60C 7/08, B60C 7/10, B60C 7/14

(54) **NON-PNEUMATIC TIRE WITH WEB HAVING VARIABLE THICKNESS**
LUFTLOSER REIFEN MIT GEWEBE MIT VARIABLER DICKE
PNEU NON PNEUMATIQUE DONT LA BANDE PRÉSENTE UNE ÉPAISSEUR VARIABLE

(30) Priority: 10.10.2017 US 201762570147 P
(43) Date of publication of application: 19.08.2020
(60) Divisional application: 24150266.5
(73) Proprietor: Bridgestone Americas Tire Operations, LLC, Nashville, TN 37201 (US)
(72) Inventor: KNOSPE, Benjamin D., Merrill, Wisconsin 54452 (US)
(74) Representative: Marks & Clerk LLP
(86) International application number: PCT/US2018/054839
(87) International publication number: WO 2019/074834

(56) References cited:
- EP-A1- 3 184 328
- CN-U- 205 951 620
- JP-A- 2015 116 870
- KR-A- 20130 056 788
- KR-B1- 101 411 103
- US-A1- 2011 011 506
- US-A1- 2012 234 445
- US-A1- 2013 240 272
- US-A1- 2014 367 007
- US-A1- 2017 157 984

## Description

### FIELD OF THE INVENTION

The present invention is directed to a tire, and more particularly, to a non-pneumatic tire.

### BACKGROUND

Non-pneumatic, or airless, tires (NPT) have previously been made of an entirely solid substance. These solid tires made the ride rather uncomfortable for passengers and caused greater damage to the suspension of a vehicle, which had to compensate for the lack of "give" in a solid tire.

More recently, NPTs have employed spokes or webbing extending between an inner ring and an outer ring. By way of example, U.S. Published Application 2006/0113016 by Cron, et al., and assigned to Michelin, discloses a non-pneumatic tire that it commercially refers to as the Tweel^{™}. In the Tweel^{™}, the tire combines with the wheel. It is made up of four parts that are eventually bonded together: the wheel, a spoke section, a reinforced annular band that surrounds the spoke section, and a rubber tread portion that contacts the ground.

According to its abstract, US 2012/234445 A1 describes a non-pneumatic tire for supporting a load by working in tension comprising a generally annular inner ring, a generally annular outer ring, and an interconnected web having a plurality of web elements and comprising a plurality of generally polygonal openings. Web elements are sized, oriented and comprised of a material that facilitates buckling when subjected to a compressive load. By buckling, those elements in a deformed portion of the tire between a wheel and a footprint region where the tire contacts a surface can assume a significantly reduced portion of the load, if any. This causes web elements in other portions of the interconnected web to operate in tension to support the load.

### SUMMARY OF THE INVENTION

Aspects of the present invention are defined by the appended independent claims. Preferred embodiments of the present invention are defined by the appended dependent claims.

### BRIEF DESCRIPTION OF THE DRAWINGS

In the accompanying drawings, structures are illustrated that, together with the detailed description provided below, describe exemplary embodiments of the claimed invention. Like elements are identified with the same reference numerals. The drawings are not to scale and the proportion of certain elements may be exaggerated for the purpose of illustration.
**Figure** 1 is a front view of an undeformed nonpneumatic tire not according to the invention.
**Figure 2** is a front view of the non-pneumatic tire of **Figure 1** being deformed when subjected to a load.
**Figure 3** is a sectional perspective view of the undeformed non-pneumatic tire taken along line **3-3** in **Figure 1****.**
**Figure 4** is a front view of another example of an undeformed non-pneumatic tire not according to the invention.
**Figure 5** is a front view of yet another example of an undeformed non-pneumatic tire not according to the invention.
**Figure 6** is a front view of still another example of an undeformed non-pneumatic tire not according to the invention.
**Figure 7** is a front view of yet another example of an undeformed non-pneumatic tire not according to the invention.
**Figure 8** is a front view of still another example of an undeformed non-pneumatic tire not according to the invention.
**Figure 9** is a front view of yet another example of an undeformed non-pneumatic tire not according to the invention.
**Figure 10A** is a front view of an example of an undeformed non-pneumatic tire not according to the invention.
**Figure 10B** is a detail view of a web of the undeformed non-pneumatic tire of **Figure 10A****.**
**Figure 10C** is a perspective view of a lower portion of the web of **Figure 10A** being deformed when subjected to a load.
**Figure 11A** is a detail view of a web of anr embodiment of an undeformed non-pneumatic tire with a web having a variable thickness defined by a radius at each vertex.
**Figure 11B** is a perspective view of a lower portion of the web of **Figure 11A** being deformed when subjected to a load.
**Figure 12** is a perspective view of a web portion of another example of a non-pneumatic tire not according to the invention, wherein the web has a variable thickness defined by a larger radius at each vertex.
**Figure 13A** is a detail view of a web of yet another example of an undeformed non-pneumatic tire not according to the invention, wherein the web has a variable thickness defined by an elliptical transition at each vertex.
**Figure 13B** is a perspective view of a lower portion of the web of **Figure 13A** being deformed when subjected to a load.
**Figure 14A** is a detail view of a web of yet another example of an undeformed non-pneumatic tire not according to the invention, wherein the web has a variable thickness defined by a variable transition at each vertex.
**Figure 14B** is a perspective view of a lower portion of the tire of Figure 14A being deformed when subjected to a load.
**Figure 14C** is a detail view of the area C of Figure 14A.
**Figure 14D** is a detail view of the area D of Figure 14A.
**Figure 14E** is a detail view of the area E of Figure 14A.
**Figure 14F** is a detail view of the area F of Figure 14A.

### DETAILED DESCRIPTION

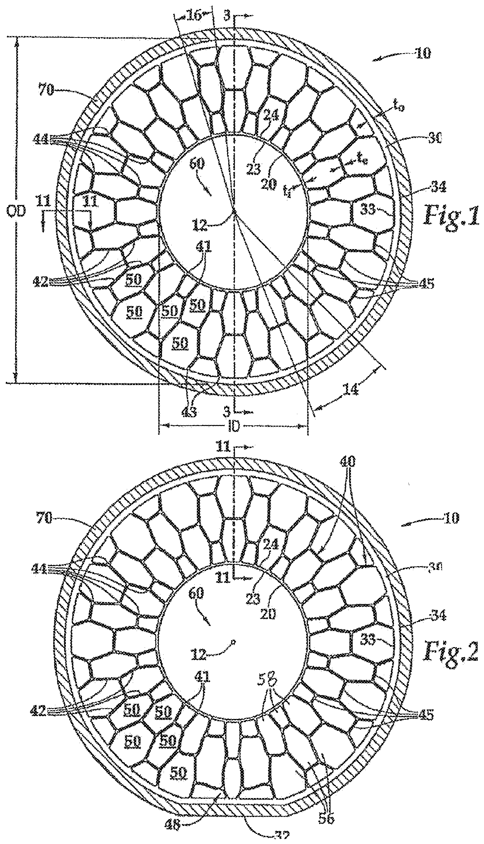

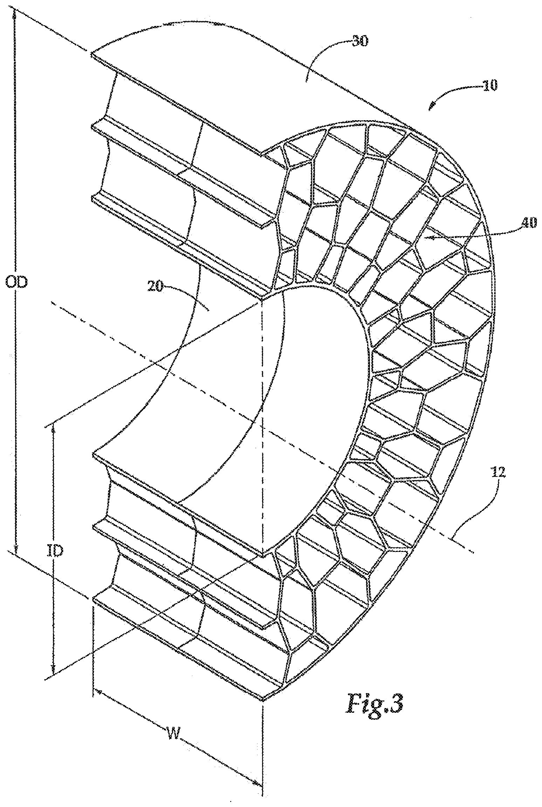

Figures 1, 2, and 3 illustrate one example of a non-pneumatic tire 10 not according to the invention. In the illustrated example, the non-pneumatic tire 10 includes a generally annular inner ring 20 that engages a wheel 60 to which tire 10 is mounted. The wheel 60 has an axis of rotation 12 about which tire 10 spins. The generally annular inner ring 20 comprises an internal surface 23 and an external surface 24 and can be made of cross-linked or uncross-linked polymers. In one example, the generally annular inner ring 20 can be made of a thermoplastic material such as a thermoplastic elastomer, a thermoplastic urethane, or a thermoplastic vulcanizate. In another example, the generally annular inner ring 20 can be made of rubber, polyurethane, or other suitable material. In this application, the term "polymer" means cross-linked or uncross-linked polymers.

For smaller applied loads, the generally annular inner ring 20 can be adhesively engaged with wheel 60 or can undergo some chemical structure change allowing it to bond to the wheel 60. For larger applied loads, the generally annular inner ring 20 can be engaged to the wheel 60 via some form of a mechanical connection such as a mating fit, although a mechanical connection can be used for supporting smaller loads as well. The mechanical engagement can provide both the wheel 60 and the generally annular inner ring 20 with extra strength to support the larger applied load. In addition, a mechanical connection has the added benefit of ease of interchangeability. For example, if the non-pneumatic tire 10 needs to be replaced, generally annular inner ring 20 can be detached from wheel 60 and replaced. The wheel 60 can then be remounted to the axle of the vehicle, allowing the wheel 60 to be reusable. In another example, the inner ring 20 can be connected to the wheel 60 by a combination of a mechanical and adhesive connection.

With continued reference to Figures 1, 2 and 3, the non-pneumatic tire 10 further comprises a generally annular outer ring 30 surrounding an interconnected web 40 (discussed below). The outer ring 30 can be configured to deform in an area around and including a footprint region 32 (see Figure 2), which decreases vibration and increases ride comfort. However, since in some embodiments the non-pneumatic tire 10 does not have a sidewall, the generally annular outer ring 30, combined with the interconnected web 40, can also add lateral stiffness to the tire 10 so that the tire 10 does not unacceptably deform in portions away from the footprint region 32.

In one example, the generally annular inner ring 20 and a generally annular outer ring 30 are made of the same material as interconnected web 40. For example, in one example the inner ring, outer ring, and interconnected web are all comprised of a urethane material. The generally annular inner ring **20** and the generally annular outer ring **30** and the interconnected web **40** can be made by injection or compression molding, castable polymer, or any other method generally known in the art and can be formed at the same time so that their attachment is formed by the material comprising the inner ring **20,** the outer ring **30** and the interconnected web **40** cooling and setting.

As shown in **Figure 1**, the generally annular outer ring **30** can have a radially external surface **34** to which a tread carrying layer **70** is attached. Attachment can be done adhesively or using other methods commonly available in the art.

As shown in **Figures 1, 2** and **3****,** the interconnected web **40** of non-pneumatic tire **10** connects the generally annular inner ring **20** to the generally annular outer ring **30.** In the illustrated example, the interconnected web **40** comprises at least two radially adjacent layers **56, 58** of web elements **42** that define a plurality of generally polygonal openings **50.** In other words, with at least two adjacent layers **56, 58,** a slice through any radial portion of the non-pneumatic tire **10** extending from the axis of the rotation **12** to the generally annular outer ring **30** passes through or traverses at least two generally polygonal openings **50.** The polygonal openings **50** can form various shapes. In many examples, a majority of generally polygonal openings **50** can be generally hexagonal shape with six sides. However, it is possible that each one of the plurality of generally polygonal openings **50** has at least three sides. In one example, the plurality of generally polygonal openings **50** are either generally hexagonal in shape or hexagonal in shape circumferentially separated by openings that are generally trapezoidal in shape, as can be seen in **Figure1****,** giving interconnected web **40** a shape that can resemble a honeycomb.

A preferred range of angles between any two interconnected web elements (moving radially from the tread portion of the tire to the wheel) can be between 80 and 180 degrees (*see,* for example, the web elements of **Figure 1**). Other ranges are also possible.

With continued reference to the illustrated example of **Figures 1, 2** and **3****,** the interconnected web **40** can be arranged such that one web element **42** connects to the generally annular inner ring **20** at any given point or line along the generally annular inner ring **20** such that there are a first set of connections **41** along the generally annular inner ring **20.** Likewise, one web element **42** can connect to the generally annular outer ring **30** at any given point or line along an internal surface **33** of the generally annular outer ring **30** such that there are a second set of connections **43** along the generally annular outer ring **30.** However, more than one web element **42** can connect to either the generally annular inner ring **20** or to the generally annular outer ring **30** at any given point or line.

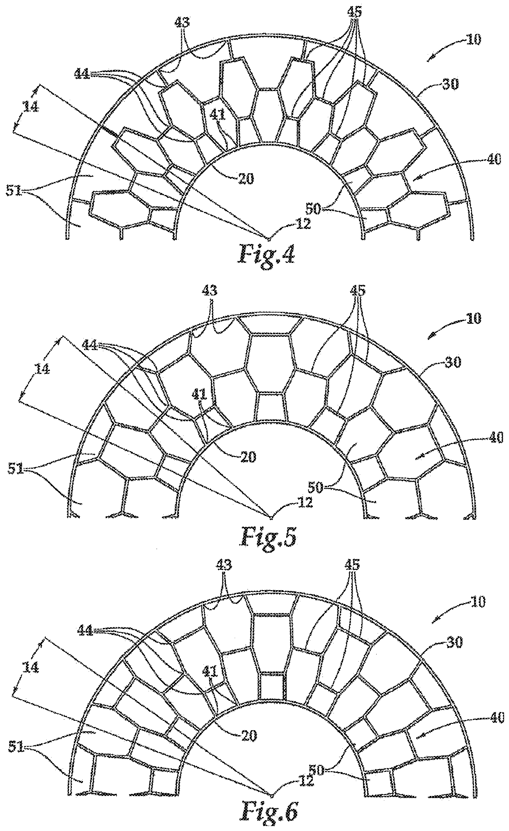

As shown in **Figures 4-9****,** the interconnected web **40** can further comprise intersections **44** between web elements **42** in order to distribute an applied load throughout the interconnected web **40.** In these illustrated examples not according to the invention, each intersection **44** joins at least three web elements **42.** However, in other examples, the intersections **44** can join more than three web elements **42,** which can assist in further distributing the stresses and strains experienced by web elements **42.**

With continued reference to **Figures 4-9****,** the web elements **42** can be angled relative to a radial plane **16** containing the axis of rotation **12** that also passes through web element **42.** By angling the web elements **42,** an applied load that is generally applied perpendicular to the axis of rotation **12** can be eccentrically applied to the web elements **42.** This can create a rotational or bending component of an applied load on each web element **42,** facilitating buckling of those web elements **42** subjected to a compressive load. Similarly situated web elements **42** can all be angled by about the same amount and in the same direction relative to radial planes **16.** Preferably, however, the circumferentially consecutive web elements **42,** excluding tangential web elements **45,** of a layer of plurality of generally polygonal openings **50** are angled by about the same magnitude but measured in opposite directions about radial planes such that web elements **42** are generally mirror images about radial plane **16** of one another.

In addition to the web elements **42** that are generally angled relative to radial planes **16** passing through axis of rotation **12,** the interconnected web **40** can also include tangential web elements **45,** as shown in **Figures 1-9****.** The tangential web elements **45** can be oriented such that they are generally aligned with tangents to cylinders or circles centered at axis of rotation **12.** The tangential web elements **45** are preferred because they assist in distributing applied load. For example, when the applied load is applied, the web elements **42** in a region above axis of rotation **12** are subjected to a tensile force. Without the tangential web elements **45,** interconnected web **40** may try to deform by having the other web elements **42** straighten out, orienting themselves in a generally radial direction, resulting in stress concentrations in localized areas. However, by being oriented in a generally tangential direction, the tangential web elements **45** distribute the applied load throughout the rest of interconnected web **40,** thereby minimizing stress concentrations.

With continued reference to **Figures 1-9** the plurality of generally polygonal openings **50** are shown wherein each one of the plurality of generally polygonal openings **50** is radially oriented. As noted above, the generally polygonal openings **50** can be oriented such that they are symmetrical about radial symmetry planes **14** that pass through axis of rotation **12.** This arrangement can facilitate installation by allowing tire **10** to still function properly even if it is installed backwards because it should behave in the same manner regardless of its installed orientation.

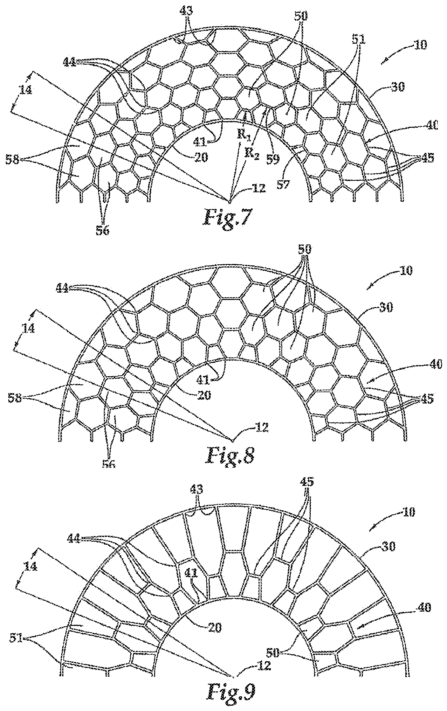

Each of the openings within the plurality of generally polygonal tubular openings 50 can, but is not required, to be similar in shape. **Figure 7**, for example shows a first plurality of generally polygonal openings **50** that is different in shape from a second plurality of generally polygonal openings **51.** In this example, at least one opening of the first plurality of general polygonal openings **50** can be smaller than at least one opening of the second plurality of generally polygonal openings **51.** **Figure 7** also shows that each generally polygonal opening in the first plurality of generally polygonal openings **50** has an inner boundary **57** spaced a radial distance, **Ri,** from axis of rotation **12** and each generally polygonal opening in the second plurality of generally polygonal openings **51,** has a second inner boundary **59** spaced a radial distance, **R₂**, which can be greater than **Ri,** from axis of rotation **12.**

The number of openings **50** within the interconnected web **40** can vary. For example, the interconnected web **40** can have five differently sized openings patterned 16 times for a total of 80 cells, such as in **Figure 1****.** In yet other examples, other numbers of openings **50** can be used other than 16. For example, in preferred embodiments the interconnected web **40** could include between 12-64 patterns of cells. Other numbers outside of this range are also possible.

As shown in **Figures 7** and **8**, openings in a radially inner layer **56** can be similarly shaped as compared to those in a radially outer layer **58** but can be sized differently from those openings such that the generally polygonal openings **50** increase in size when moving from opening to opening in a radially outward direction. However, a second plurality of generally polygonal openings in a radially outer layer can also be smaller than those in a first plurality of generally polygonal openings in a radially inner layer. In addition, the second plurality of generally polygonal openings can be either circumferentially separated from each other by a third plurality of generally polygonal openings **53** or can be greater in number than the first plurality of generally polygonal openings **50,** or it can be both.

As noted above, **Figures 1-9** show several variations of a plurality of generally polygonal openings **50** that are generally hexagonally shaped. These openings can be symmetrical in one direction or in two directions. In an alternative example, they are not symmetrical. For example, in **Figure 1****,** radial symmetry planes **14** bisect several of the plurality of generally polygonal openings **50.** Those openings are generally symmetrical about radial symmetry planes **14.** However, interconnected web **40** of tire **10** can also be generally symmetrical as a whole about radial symmetry planes. In comparison, a second plurality of generally polygonal openings **14** can be generally symmetrical about similar radial symmetry planes **14.** In addition, as shown in **Figures 7** and **8**, a second plurality of generally polygonal openings can be generally symmetrical about lines tangent to a cylinder commonly centered with axis of rotation **12,** providing a second degree of symmetry.

The web elements **42** can have varying lengths from one example to another or within the same example. For example, the interconnected web **40** in **Figure 7** comprises web elements **42** that are generally shorter than web elements of the interconnected web shown in **Figure 6****.** As a result, interconnected web **42** can appear denser in **Figure 7****,** with more web elements **42** and more generally polygonal openings **50** in a given arc of tire **10.** **Figure 9** shows an interconnected web **40** with web elements **42** that substantially vary in length within the same interconnected web. Radially inward web elements **42** are generally shorter than web elements **42** located comparatively radially outward.

With reference back to **Figure 2****,** the combination of the geometry of interconnected web **40** and the material chosen in interconnected web **40** can enable an applied load to be distributed throughout the web elements **42.** Because the web elements **42** are preferably relatively thin and can be made of a material that is relatively weak in compression, those elements **42** that are subjected to compressive forces may have a tendency to buckle. These elements are generally between the applied load that generally passes through axis of rotation **12** and footprint region **32** and are represented as buckled section **48** in **Figure 2****.**

In one example, some or all of the web elements **42** can be provided with weakened (*e.g.*, previously bent) or thinned sections such that the web elements **42** preferentially bend or are biased to bend in a certain direction. For example, in one embodiment, the web elements are biased such that they bend generally in an outwardly direction. In this manner, web elements do not contact or rub against each as they buckle. In addition, the position of the weakened or thinned portion can be used to control the location of the bending or buckling to avoid such contact.

When buckling occurs, the remaining web elements **42** may experience a tensile force. It is these web elements **42** that support the applied load. Although relatively thin, because web elements **42** can have a high tensile modulus they can have a smaller tendency to deform but instead can help maintain the shape of the tread carrying layer **70.** In this manner, the tread carrying layer **70** can support the applied load on the tire **10** as the applied load is transmitted by tension through the web elements **42.** The tread carrying layer **70,** in turn, acts as an arch and provides support. Accordingly, the tread carrying layer **70** is sufficiently stiff to support the web elements **42** that are in tension and supporting the load. A substantial amount of the applied load may be supported by the plurality of the web elements working in tension. For example, in one example, at least 75% of the load is supported in tension, in another embodiment at least 85% of the load is supported in tension and in another exampleat least 95% of the load is supported in tension. In other embodiments, less than 75% of the load can be supported in tension.

Although the generally annular inner ring **20,** the generally annular outer ring **30,** and the interconnected web **40** can be constructed of the same material, they can all have different thicknesses. That is, the generally annular inner ring can have a first thickness, **tᵢ**, the generally annular outer ring can have a second thickness, **tₒ**, and the interconnected web can have a third thickness, **tₑ.** In the exampleshown in **Figure 1****,** the first thickness **tᵢ** can be less than the second thickness **tₒ.** However, the third thickness, **tₑ,** can be less than either first thickness, **tᵢ,** or the second thickness, **tₒ.** Thinner web elements **42** buckles more easily when subjected to a compressive force whereas a relatively thicker generally annular inner ring **20** and the generally annular outer ring **30** can advantageously help maintain lateral stiffness of non-pneumatic tire **10** in an unbuckled region by better resisting deformation.

The thickness, **tₑ,** of web elements **42** can vary, depending on predetermined load capability requirements. For example, as the applied load increases, the web elements **42** can increase in thickness, **tₑ,** to provide increased tensile strength, reducing the size of the openings in the plurality of generally polygonal openings **50.** However, the thickness, **tₑ,** should not increase too much so as to inhibit buckling of those web elements **42** subject to a compressive load. As with choice of material, the thickness, **tₑ,** can increase significantly with increases in the applied load. For example, in certain non-limiting embodiments, each web element **42** of interconnected web **40** can have a thickness, **tₑ** between about 0.102cm (0.04 inch) and 0.254cm (0.1 inch) thick for tire loads of about 0-453.592kg (0-1000 pounds), between about 0.254cm (0.1) and 0.635cm (0.25 inch) thick for loads of about 226.796-2267.962kg (500-5000 pounds), and between 0.635cm (0.25) and 1.27cm (0.5 inch) thick for loads of about 907.185kg (2000 pounds) or greater. Those of skill in the art will recognize that these thicknesses can be decreased or increased in modified embodiments.

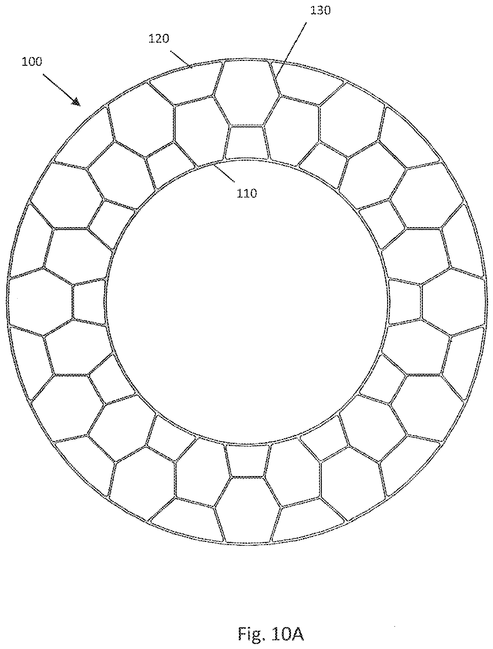

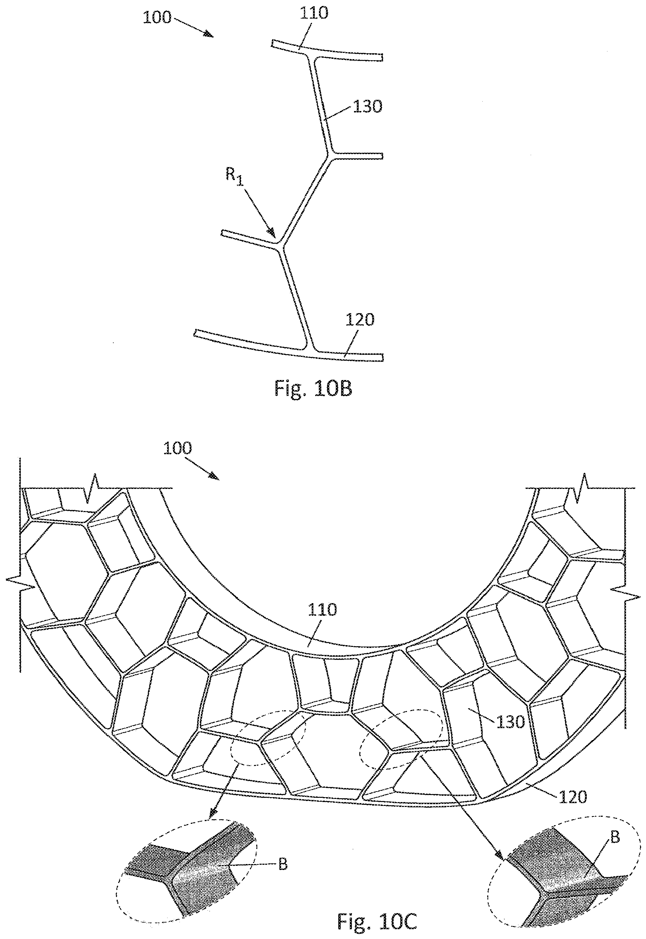

While the examples illustrated in **Figures 1-9** include web elements **42** that each have a substantially constant thickness, **tₑ,** in alternative embodiments, the thickness of one or more web elements vary. Exemplary effects of such variance are illustrated in **Figures 10-14****.**

Figures 10A-C illustrate a reference tire **100** not according to the invention having a generally annular inner ring **110,** a generally annular outer ring **120,** and a plurality of web elements **130** that define polygonal openings. **Figure 10A** provides a front of tire **100** in an undeformed state and **Figure 10B** is a detail view of a portion of a web of the tire **100.** In this particular embodiment, the web elements **130** form a plurality of hexagonal and substantially trapezoidal shapes, including an outer series of alternating hexagonal and trapezoidal opening and an inner series of alternating hexagonal and trapezoidal openings. The inner and outer openings are aligned such that a radial plane that bisects an inner hexagonal opening would also bisect an outer trapezoidal opening, and a radial plane that bisects an inner trapezoidal opening would also bisect an outer trapezoidal opening. In this example, the radial plane that bisects an inner opening would only pass through two openings-the inner opening and a corresponding outer opening. It should be understood, however, that this arrangement is merely exemplary and is being used for illustrative purposes. In alternative examples, web elements that form any shape may be employed.

In the illustrated example, each of the web elements **130** has substantially the same thickness along its length. As can be seen in **Figure 10B****,** each vertex of each polygonal opening is defined by a small radius **R₁.** The small radius **R₁** is much smaller than the radial distance between the inner ring **110** and outer ring **120,** and much smaller than the length of any given web element **130.** Thus, there is only a negligible widening of each web element **130** as it approaches a vertex.

In one example, the inner ring **110** has a diameter of 12.690 inches (32.232 cm) and the outer ring **120** has a diameter of 21.917 inches (55.669 cm). Thus, the radial distance between the inner ring **110** and the outer ring **120** is 4.614 inches (11.720 cm). In this embodiment, the web elements **130** have lengths between 1.508 inches (3.830 cm) and 1.798 inches (4.567 cm), and a thickness of 0.080 inches (0.203 cm). Each vertex is defined by a small radius **R₁** of 0.1 inches (0.254 cm). However, it should be understood that the tire **100** may have any dimensions such that the radius at the vertices of each web element **130** is less than or equal to 125% of the mean element thickness.

**Figure 10C** is a perspective view of a lower portion of the web being deformed when subjected to a load. **Figure 10C** further includes detail views of selected regions to illustrate exemplary stresses on the web elements. In this example, the web elements **130** are subject to high stresses at each vertex as the tire **100** rotates while subjected to a load. Moreover, the high stresses are concentrated in a narrow band **B.**

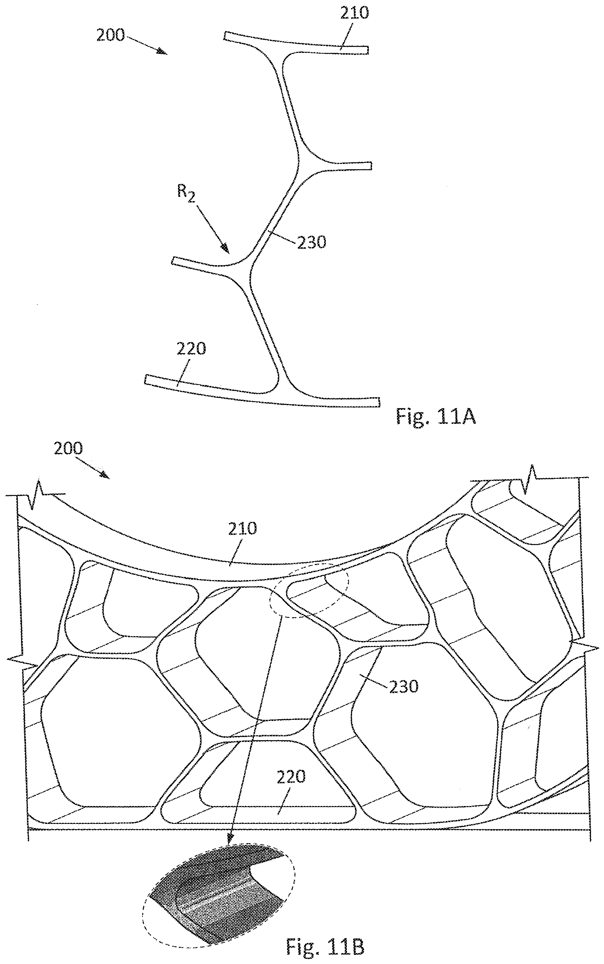

By contrast, Figures 11A-B illustrate a first variable thickness tire **200,** *i*.*e*., a non-pneumatic tire with a web having a variable thickness defined by a larger radius at each vertex. **Figure 11A** is a detail view of a web of the first variable thickness tire **200,** including a generally annular inner ring **210,** a generally annular outer ring **220,** and a plurality of web elements **230** that define polygonal openings. The first variable thickness tire **200** has the same shapes and dimensions as the reference tire **100,** except that each vertex of each polygonal opening is defined by a medium radius **R₂**.

In one example, the first variable thickness tire **200** has the same dimensions as those described for the exemplary reference tire **100,** except the medium radius **R₂** is 0.5 inches (1.27 cm). Thus, the first variable thickness tire **200** is dimensioned such that the radius at the vertices of each web element **230** is 625% of the mean element thickness. In a non-pneumatic tire according to the present invention the radius is selected to be 400% to 800% of the mean element thickness.

**Figure 11B** is a perspective view of a lower portion of a web of the first variable thickness tire **200** being deformed when subjected to a load. **Figure 11B** further includes detail views of selected regions to illustrate exemplary stresses on the web elements. In this embodiment, when compared to the reference tire **100** the web elements **230** are subject to relatively lower stresses at each vertex as the tire **200** rotates while subjected to a load. Additionally, the small radius transition was effective at removing the narrow stress band. However, the location of high stress concentration changed and resulted in an even higher stress value, and the stresses are still more highly concentrated than may be desirable.

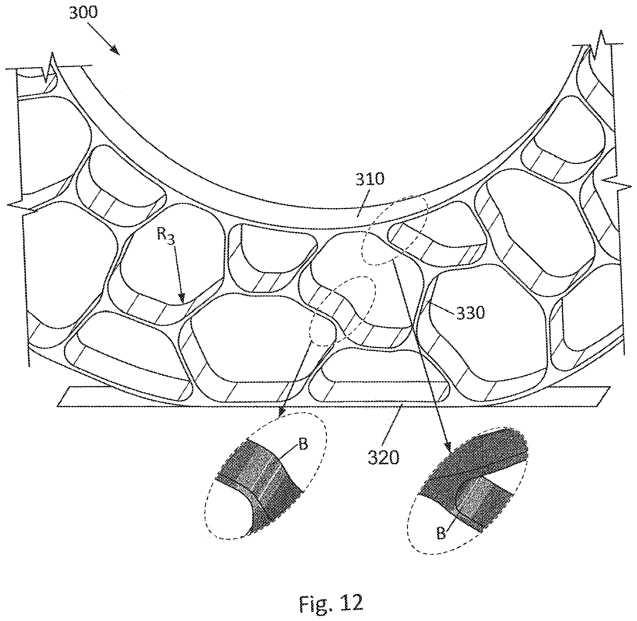

**Figure 12** is a perspective view of a lower portion of a web of a second variable thickness tire **300** not according to the invention. Here, the web has a variable thickness defined by a larger radius at each vertex. **Figure 12** further includes detail views of selected regions to illustrate exemplary stresses on the web elements. The second variable thickness tire **300** has a generally annular inner ring **310,** a generally annular outer ring **320,** and a plurality of web elements **330** that define polygonal openings. The second variable thickness tire **300** has the same shapes and dimensions as the reference tire **100,** except that each vertex of each polygonal opening is defined by a large radius **R₃.**

In one example, the second variable thickness tire **300** has the same dimensions as those described for the exemplary reference tire **100,** except the large radius **R₃** is 0.7 inches (1.78 cm). Thus, the second variable thickness tire **300** is dimensioned such that the radius at the vertices of each web element **330** is 875% of the mean element thickness. In one example, the radius is selected to be 800% to 1000% of the mean element thickness.

In this example, when compared to the reference tire **100** the web elements **330** are subject to higher stresses at each vertex as the tire **300** rotates while subjected to a load. The large radius **R₃** results in too much material at the junctions, reducing the effective length of the flexible section of each web element **330.** The stresses are concentrated in a slightly wider band **B,** which has shifted to yet another location.

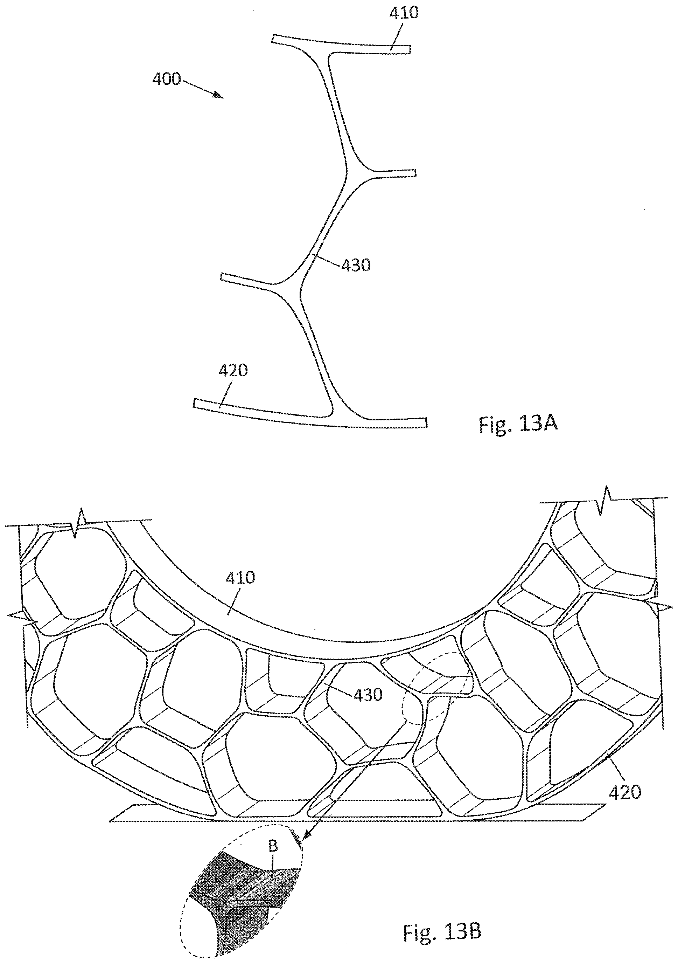

Figures 13A-B illustrate a third variable thickness tire **400** not according to the invention, *i.e.*, a non-pneumatic tire with a web having a variable thickness defined by an elliptical transition at each vertex. **Figure 13A** is a detail view of a web of the third variable thickness tire **400,** including a generally annular inner ring **410,** a generally annular outer ring **420,** and a plurality of web elements **430** that define polygonal openings. The third variable thickness tire **400** has the same shapes and dimensions as the reference tire **100,** except that each vertex of each polygonal opening is defined by an elliptical transition.

In one example, the third variable thickness tire **400** has the same dimensions as those described for the exemplary reference tire **100,** except where the vertices include an elliptical portion. The elliptical shape allows for a two dimension definition of the transition. The use of an elliptical shape also allows for a reduction of material at each of the vertices that resulted from the use of a simple radius. The extra material from the simple radius contributed to the inflexible behaviors that were observed during tests.

**Figure 13B** is a perspective view of a lower portion of the web of the third variable thickness tire **400** being deformed when subjected to a load. **Figure 13B** further includes detail views of selected regions to illustrate exemplary stresses on the web elements **430.** In this example, the web elements **430** are subject to significantly lower stresses at each vertex as the tire **400** rotates while subjected to a load. The stresses are distributed in a wider band near the outer ring **420,** but are still concentrated in a narrow band **B** near the inner ring **410.** Ultimately, this example still included too much material at the transitions.

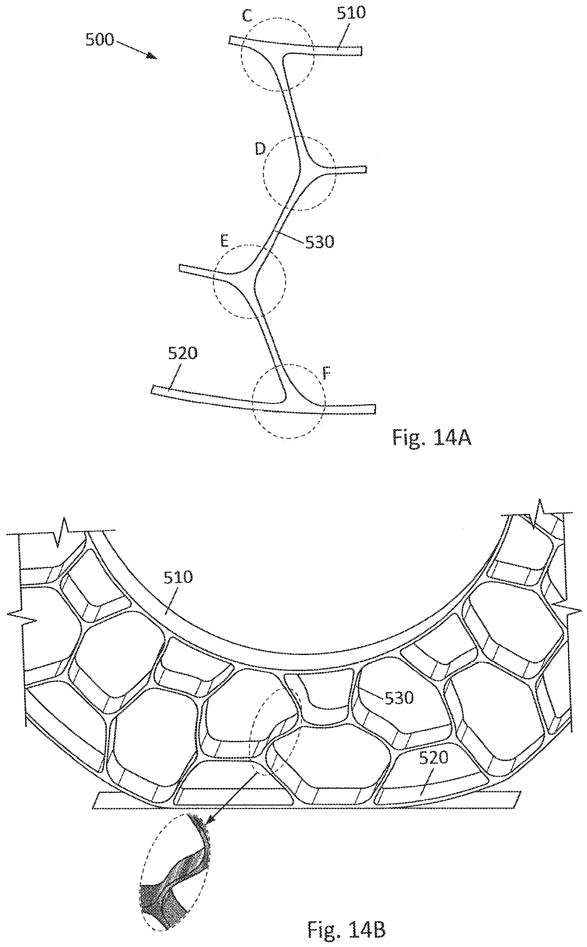

**Figures 14A-14F** illustrate a fourth variable thickness tire **500** not according to the invention, *i*.*e*., a non-pneumatic tire with a web having a variable thickness defined by variable transitions at each vertex. **Figure 14A** is a detail view of a web of the fourth variable thickness tire **500,** including a generally annular inner ring **510,** a generally annular outer ring **520,** and a plurality of web elements **530** that define polygonal openings. The fourth variable thickness tire **500** has the same shapes and dimensions as the reference tire **100,** except that each vertex of each polygonal opening is defined by a selected radial or spline transition.

**Figure 14B** is a perspective view of a lower portion of the web of the fourth variable thickness tire **500** being deformed when subjected to a load. **Figure 14B** further includes detail views of selected regions to illustrate exemplary stresses on the web elements **530.** In this example, the web elements **530** are subject to significantly lower stresses at each vertex as the tire **500** rotates while subjected to a load. The stresses are distributed in wide bands throughout the webbing. In one example, the use of fully variable transitions led to approximately a 30% reduction of peak stress under normal operations.

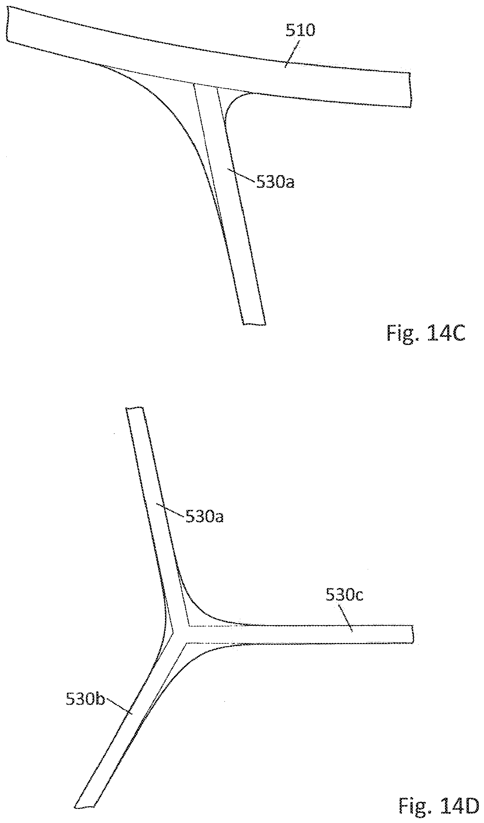

Examples of the variable transitions are shown further in the detail views of **Figures 14C-14F****.**

**Figure 14C** is a detail view of the area **C** of **Figure 14A****.** In this area, two vertices between an inner web element **530a** and the inner ring **510** are shown. From this view, an obtuse left-side angle and an acute right-side angle are formed between the inner web element **530a** and the inner ring **510.** The obtuse left-side angle is smoothed by a manually shaped spline that adds more material to the left of the center line of the inner web element **530a.** The acute right-side angle is smoothed by a small, simple radius.

**Figure 14D** is a detail view of the area **D** of **Figure 14A****.** In this area, three vertices are shown, including a left vertex between the inner web element **530a** and an intermediate web element **530b,** an upper right vertex between the inner web element **530a** and an inner radial web element **530c,** and a lower right vertex between the intermediate web element **530b** and the inner radial web element **530c.** In this area, all three vertices are defined by manually shaped splines.

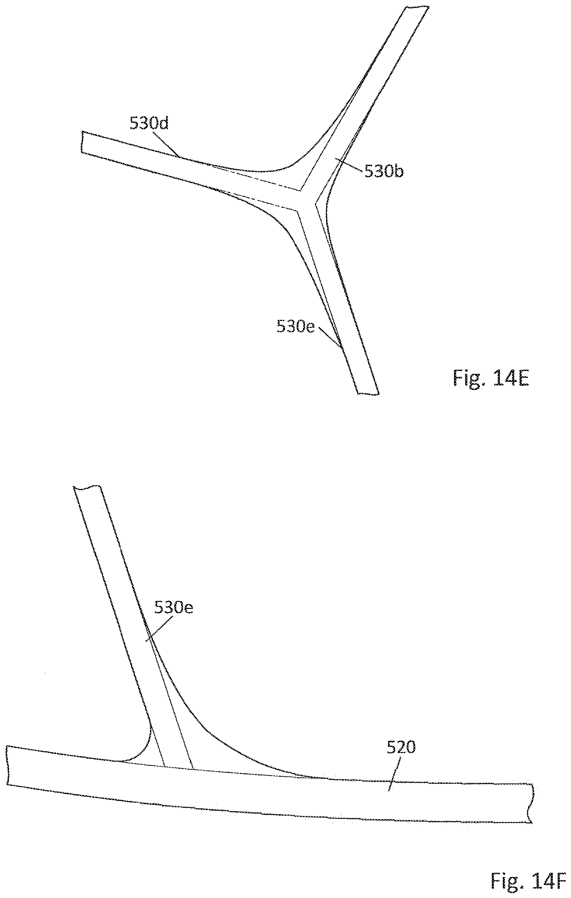

**Figure 14E** is a detail view of the area **E** of **Figure 14A****.** In this area, three vertices are shown, including an upper left vertex between the intermediate web element **530b** and an outer radial web element **530d,** a right vertex between the intermediate web element **530b** and an outer web element **530e,** and a lower left vertex between the outer radial web element **530d** and the outer web element **530e.** In this area, all three vertices are defined by manually shaped splines.

**Figure 14F** is a detail view of the area **F** of **Figure 14A****.** In this area, two vertices between the outer web element **530e** and the outer ring **520** are shown. From this view, an acute left-side angle and an obtuse right-side angle are formed between the outer web element **530e** and the outer ring **520.** The obtuse right-side angle is smoothed by a manually shaped spline that adds more material to the left of the center line of the outer web element **530e.** The acute left-side angle is smoothed by a small, simple radius.

While the specific transitions of **Figures 14A-14F** are described above, it should be understood that each transition should be determined according to the particular geometry of a non-pneumatic tire and its associated webbing. In one embodiment, machine learning or other artificial intelligence may be employed in the selection of the transition.

To the extent that the term "includes" or "including" is used in the specification or the claims, it is intended to be inclusive in a manner similar to the term "comprising" as that term is interpreted when employed as a transitional word in a claim. Furthermore, to the extent that the term "or" is employed (e.g., A or B) it is intended to mean "A or B or both." When the applicants intend to indicate "only A or B but not both" then the term "only A or B but not both" will be employed. Thus, use of the term "or" herein is the inclusive, and not the exclusive use. See, Bryan A. Garner, A Dictionary of Modern Legal Usage 624 (2d. Ed. 1995). Also, to the extent that the terms "in" or "into" are used in the specification or the claims, it is intended to additionally mean "on" or "onto." Furthermore, to the extent the term "connect" is used in the specification or claims, it is intended to mean not only "directly connected to," but also "indirectly connected to" such as connected through another component or components. While the present invention has been illustrated by the description of embodiments thereof, and while the embodiments have been described in considerable detail, it is not the intention of the applicants to restrict or in any way limit the scope of the appended claims to such detail. Additional advantages and modifications will readily appear to those skilled in the art.

## Claims

1. A non-pneumatic tire (200) comprising:
a generally annular inner ring (210) having an axis of rotation;
a deformable generally annular outer ring (220); and
a flexible interconnected web extending between the inner ring (210) and the outer ring (220), the interconnected web including at least two radially adjacent layers of web elements (230) at every radial cross-section of the tire (200), the web elements (230) defining a plurality of generally polygonal openings and including a plurality of radial web elements (230) that are angled relative to a plane that extends radially through the axis of rotation and a plurality of distinct tangential web elements (230) that are generally transverse to the radial plane,
wherein each generally polygonal opening is defined by a plurality of vertices,
wherein when load is applied, a substantial amount of the load is supported by a plurality of the web elements (230) working in tension, and
wherein a plurality of the radial web elements (230) in a region above the axis of rotation are subjected to a tensile force while at least some of the radial web elements (230) in a region between the load and a footprint region buckle and a plurality of the tangential web elements (230) distribute the load through the flexible interconnected web,
**characterized in that** each of the plurality of vertices is defined by a transitional element that varies a thickness of an associated web element (230) along at least a portion of a length of the web element (230), and wherein the transitional element is defined by a radius (R₂) that is 400% to 800% of a mean element thickness.

2. The non-pneumatic tire (200) of claim 1, further comprising a tread carrying layer affixed to a radially external surface of the outer ring (220), the tread carrying layer support supporting the web elements (230) working in tension.

3. The non-pneumatic tire (200) of claim 1, wherein the plurality of generally polygonal openings comprises a first plurality of generally polygonal openings having a first shape and a second plurality of generally polygonal openings having a second shape different from the first shape.

4. The non-pneumatic tire (200) of claim 3, wherein the first plurality of generally polygonal openings includes a plurality of inner hexagonal openings and a plurality of outer hexagonal openings, and wherein the second plurality of generally polygonal openings includes a plurality of inner trapezoidal openings and a plurality of outer trapezoidal openings.

5. The non-pneumatic tire (200) of claim 4, wherein a radial plane that bisects an inner hexagonal opening would also bisect an outer trapezoidal opening, and a radial plane that bisects an inner trapezoidal opening would also bisect an outer trapezoidal opening.

6. A method of designing a non-pneumatic tire (200), the method comprising:
providing a generally annular inner ring (210) having an axis of rotation;
providing a deformable generally annular outer ring (220); and
connecting the inner ring (210) to the outer ring (220) with a flexible interconnected web having at least two radially adjacent layers of web elements (230) at every radial cross-section of the tire (200), such that the web elements (230) define a plurality of generally polygonal openings having a plurality of vertices, and such that the web elements (230) include a plurality of radial web elements (230) that are angled relative to a plane that extends radially through the axis of rotation and a plurality of distinct tangential web elements (230) that are generally transverse to the radial plane,
wherein the step of connecting the inner ring (210) to the outer ring (220) includes selecting a thickness of each web element (230) such that when a load is applied, a substantial amount of the load is supported by a plurality of the web elements (230) working in tension,
wherein a plurality of the radial web elements (230) in a region above the axis of rotation are subjected to a tensile force while at least some of the radial web elements (230) in a region between the load and a footprint region buckle and a plurality of the tangential web elements (230) distribute the load through the flexible interconnected web,
wherein the step of connecting the inner ring (210) to the outer ring 220) includes selecting a transitional element for each of the plurality of vertices, such that a thickness of an associated web element (230) is varied along at least a portion of a length of the web element (230), and
wherein each transitional element is defined by a radius that is 400% to 800% of a mean element thickness.

7. The method of claim 6, further comprising selecting a material for the inner ring (210), the outer ring (220), and the flexible interconnected web.

8. The method of claim 7, wherein the step of selecting a material for the inner ring (210), the outer ring (220), and the flexible interconnected web includes selecting a same material for the inner ring (210), the outer ring (220), and the flexible interconnected web.

9. The method of claim 7, wherein the step of selecting a thickness of each web element (230) includes selecting the thickness according to material properties of the selected material.

## Patentansprüche

1. Luftloser Reifen (200), umfassend:
einen im Allgemeinen ringförmigen Innenring (210), der eine Drehachse aufweist;
einen verformbaren im Allgemeinen ringförmigen Außenring (220); und
einen flexiblen miteinander verbundenen Steg, der sich zwischen dem Innenring (210) und dem Außenring (220) erstreckt, wobei der miteinander verbundene Steg mindestens zwei radial angrenzende Schichten von Stegelementen (230) in jedem radialen Querschnitt des Reifens (200) einschließt, wobei die Stegelemente (230) eine Vielzahl von im Allgemeinen polygonalen Öffnungen definieren und eine Vielzahl von radialen Stegelementen (230), die bezüglich einer Ebene, die sich durch die Drehachse radial erstreckt, abgewinkelt sind und eine Vielzahl von eindeutigen Tangentialstegelementen (230), die im Allgemeinen quer zu der radialen Ebene sind, einschließen,
wobei jede im Allgemeinen polygonale Öffnung durch eine Vielzahl von Eckpunkten definiert ist,
wobei, wenn Last aufgebracht wird, eine wesentliche Menge der Last durch eine Vielzahl der Stegelemente (230), die in Spannung arbeiten, getragen wird, und
wobei eine Vielzahl der radialen Stegelemente (230) in einem Bereich oberhalb der Drehachse einer Zugkraft ausgesetzt sind, während mindestens einige der radialen Stegelemente (230) in einem Bereich zwischen der Last und einem Aufstandsflächenbereich sich verbiegen und eine Vielzahl der Tangentialstegelemente (230) die Last durch den flexiblen miteinander verbundenen Steg verteilen,
**dadurch gekennzeichnet, dass** jede der Vielzahl von Eckpunkten durch ein Übergangselement definiert ist, das eine Dicke eines verknüpften Stegelements (230) entlang mindestens eines Abschnitts einer Länge des Stegelements (230) variiert, und wobei das Übergangselement durch einen Radius (R₂) definiert ist, der 400 % bis 800 % einer mittleren Elementdicke ist.

2. Luftloser Reifen (200) nach Anspruch 1, ferner umfassend eine laufflächentragende Schicht, die an einer radial externen Oberfläche des Außenrings (220) befestigt ist, wobei die Stützte der laufflächentragenden Schicht die Stegelemente (230), die in Spannung arbeiten, trägt.

3. Luftloser Reifen (200) nach Anspruch 1, wobei die Vielzahl von im Allgemeinen polygonalen Öffnungen eine erste Vielzahl von im Allgemeinen polygonalen Öffnungen, die eine erste Form aufweisen, und eine zweite Vielzahl von im Allgemeinen polygonalen Öffnungen umfasst, die eine zweite Form, die von der ersten Form verschieden ist, aufweisen.

4. Luftloser Reifen (200) nach Anspruch 3, wobei die erste Vielzahl von im Allgemeinen polygonalen Öffnungen eine Vielzahl von inneren hexagonalen Öffnungen und eine Vielzahl von äußeren hexagonalen Öffnungen einschließt, und wobei die zweite Vielzahl von im Allgemeinen polygonalen Öffnungen eine Vielzahl von inneren trapezförmigen Öffnungen und eine Vielzahl von äußeren trapezförmigen Öffnungen einschließt.

5. Luftloser Reifen (200) nach Anspruch 4, wobei eine radiale Ebene, die eine innere hexagonale Öffnung halbiert, ebenso eine äußere trapezförmige Öffnung halbiert, und eine radiale Ebene, die eine innere trapezförmige Öffnung halbiert, ebenso eine äußere trapezförmige Öffnung halbiert.

6. Verfahren zum Gestalten eines luftlosen Reifens (200), das Verfahren umfassend: Bereitstellen eines im Allgemeinen ringförmigen Innenrings (210), der eine Drehachse aufweist; Bereitstellen eines verformbaren im Allgemeinen ringförmigen Außenrings (220); und
Verbinden des Innenrings (210) mit dem Außenring (220) mit einem flexiblen miteinander verbundenen Steg, der mindestens zwei radial angrenzende Schichten von Stegelementen (230) in jedem radialen Querschnitt des Reifens (200) aufweist, derart, dass die Stegelemente (230) eine Vielzahl von im Allgemeinen polygonalen Öffnungen definieren, die eine Vielzahl von Eckpunkten aufweisen, und derart, dass die Stegelemente (230) eine Vielzahl von radialen Stegelementen (230), die bezüglich einer Ebene, die sich durch die Drehachse radial erstreckt, abgewinkelt sind und eine Vielzahl von eindeutigen Tangentialstegelementen (230), die im Allgemeinen quer zu der radialen Ebene sind, einschließen,
wobei der Schritt des Verbindens des Innenrings (210) mit dem Außenring (220) ein Auswählen einer Dicke jedes Stegelements (230) umfasst, derart, dass, wenn eine Last aufgebracht wird, eine wesentliche Menge der Last durch eine Vielzahl der Stegelemente (230), die in Spannung arbeiten, getragen wird,
wobei eine Vielzahl der radialen Stegelemente (230) in einem Bereich oberhalb der Drehachse einer Zugkraft ausgesetzt sind, während mindestens einige der radialen Stegelemente (230) in einem Bereich zwischen der Last und einem Aufstandsflächenbereich sich verbiegen und eine Vielzahl der Tangentialstegelemente (230) die Last durch den flexiblen miteinander verbundenen Steg verteilen,
wobei der Schritt des Verbindens des Innenrings (210) mit dem Außenring 220) ein Auswählen eines Übergangselements für jedes der Vielzahl von Eckpunkten umfasst, derart, dass eine Dicke eines verknüpften Stegelements (230) entlang mindestens eines Abschnitts einer Länge des Stegelements (230) variiert wird, und
wobei jedes Übergangselement durch einen Radius definiert ist, der 400 % bis 800 % einer mittleren Elementdicke ist.

7. Verfahren nach Anspruch 6, ferner umfassend das Auswählen eines Materials für den Innenring (210), den Außenring (220) und den flexiblen miteinander verbundenen Steg.

8. Verfahren nach Anspruch 7, wobei der Schritt des Auswählens eines Materials für den Innenring (210), des Außenrings (220) und den flexiblen miteinander verbundenen Steg das Auswählen eines gleichen Materials für den Innenring (210), den Außenring (220) und den flexiblen miteinander verbundenen Steg einschließt.

9. Verfahren nach Anspruch 7, wobei der Schritt des Auswählens einer Dicke jedes Stegelements (230) das Auswählen der Dicke gemäß Materialeigenschaften des ausgewählten Materials einschließt.

## Revendications

1. Pneu non pneumatique (200) comprenant :
un anneau interne (210) généralement annulaire ayant un axe de rotation ;
un anneau externe (220) généralement annulaire déformable ; et
une âme interconnectée flexible s'étendant entre l'anneau interne (210) et l'anneau externe (220), l'âme interconnectée comportant au moins deux couches radialement adjacentes d'éléments d'âme (230) au niveau de chaque coupe transversale radiale du pneu (200), les éléments d'âme (230) définissant une pluralité d'ouvertures généralement polygonales et comportant une pluralité d'éléments d'âme (230) radiaux qui sont inclinés par rapport à un plan qui s'étend radialement à travers l'axe de rotation et une pluralité d'éléments d'âme (230) tangentiels distincts qui sont généralement transversaux au plan radial,
dans lequel chaque ouverture généralement polygonale est définie par une pluralité de sommets,
dans lequel lorsqu'une charge est appliquée, une quantité substantielle de la charge est supportée par une pluralité des éléments d'âme (230) travaillant en tension, et
dans lequel une pluralité des éléments d'âme (230) radiaux dans une région au-dessus de l'axe de rotation sont soumis à une force de traction alors qu'au moins certains des éléments d'âme (230) radiaux dans une région entre la charge et une région de contact au sol fléchissent et qu'une pluralité des éléments d'âme (230) tangentiels répartissent la charge à travers l'âme interconnectée flexible,
**caractérisé en ce que** chacun parmi la pluralité de sommets est défini par un élément de transition qui fait varier une épaisseur d'un élément d'âme (230) associé le long d'au moins une partie d'une longueur de l'élément d'âme (230), et dans lequel l'élément de transition est défini par un rayon (R₂) qui vaut 400 % à 800 % d'une épaisseur moyenne d'élément.

2. Pneu non pneumatique (200) selon la revendication 1, comprenant en outre une couche porteuse de bande de roulement attachée à une surface radialement externe de l'anneau externe (220), le support de couche porteuse de bande de roulement supportant les éléments d'âme (230) travaillant en tension.

3. Pneu non pneumatique (200) selon la revendication 1, dans lequel la pluralité d'ouvertures généralement polygonales comprend une première pluralité d'ouvertures généralement polygonales ayant une première forme et une seconde pluralité d'ouvertures généralement polygonales ayant une seconde forme différente de la première forme.

4. Pneu non pneumatique (200) selon la revendication 3, dans lequel la première pluralité d'ouvertures généralement polygonales comporte une pluralité d'ouvertures hexagonales internes et une pluralité d'ouvertures hexagonales externes, et dans lequel la seconde pluralité d'ouvertures généralement polygonales comporte une pluralité d'ouvertures trapézoïdales internes et une pluralité d'ouvertures trapézoïdales externes.

5. Pneu non pneumatique (200) selon la revendication 4, dans lequel un plan radial qui divise en deux une ouverture hexagonale interne diviserait également en deux une ouverture trapézoïdale externe, et un plan radial qui divise en deux une ouverture trapézoïdale interne diviserait également en deux une ouverture trapézoïdale externe.

6. Procédé de conception d'un pneu non pneumatique (200), le procédé comprenant :
la fourniture d'un anneau interne (210) généralement annulaire ayant un axe de rotation ;
la fourniture d'un anneau externe (220) généralement annulaire déformable ; et
la liaison de l'anneau interne (210) à l'anneau externe (220) avec une âme interconnectée flexible ayant au moins deux couches radialement adjacentes d'éléments d'âme (230) au niveau de chaque coupe transversale radiale du pneu (200), de telle sorte que les éléments d'âme (230) définissent une pluralité d'ouvertures généralement polygonales ayant une pluralité de sommets, et de telle sorte que les éléments d'âme (230) comportent une pluralité d'éléments d'âme (230) radiaux qui sont inclinés par rapport à un plan qui s'étend radialement à travers l'axe de rotation et une pluralité d'éléments d'âme (230) tangentiels distincts qui sont généralement transversaux au plan radial,
dans lequel l'étape consistant à relier l'anneau interne (210) à l'anneau externe (220) comporte la sélection d'une épaisseur de chaque élément d'âme (230) de telle sorte que lorsqu'une charge est appliquée, une quantité substantielle de la charge est supportée par une pluralité des éléments d'âme (230) travaillant en tension,
dans lequel une pluralité des éléments d'âme (230) radiaux dans une région au-dessus de l'axe de rotation sont soumis à une force de traction alors qu'au moins certains des éléments d'âme (230) radiaux dans une région entre la charge et une région de contact au sol fléchissent et qu'une pluralité des éléments d'âme (230) tangentiels répartissent la charge à travers l'âme interconnectée flexible,
dans lequel l'étape consistant à relier l'anneau interne (210) à l'anneau externe 220) comporte la sélection d'un élément de transition pour chacun parmi la pluralité de sommets, de telle sorte qu'une épaisseur d'un élément d'âme (230) associé est variée le long d'au moins une partie d'une longueur de l'élément d'âme (230), et
dans lequel chaque élément de transition est défini par un rayon qui vaut 400 % à 800 % d'une épaisseur moyenne d'élément.

7. Procédé selon la revendication 6, comprenant en outre la sélection d'un matériau pour l'anneau interne (210), l'anneau externe (220) et l'âme interconnectée flexible.

8. Procédé selon la revendication 7, dans lequel l'étape de sélection d'un matériau pour l'anneau interne (210), l'anneau externe (220) et l'âme interconnectée flexible comporte la sélection d'un même matériau pour l'anneau interne (210), l'anneau externe (220) et l'âme interconnectée flexible.

9. Procédé selon la revendication 7, dans lequel l'étape de sélection d'une épaisseur de chaque élément d'âme (230) comporte la sélection de l'épaisseur selon des propriétés de matériau du matériau sélectionné.
